(19) Europäisches Patentamt
European Patent Office
Office européen des brevets

(11) **EP 2 908 168 B1**

(12) **EUROPÄISCHE PATENTSCHRIFT**

(45) Veröffentlichungstag und Bekanntmachung des Hinweises auf die Patenterteilung:
**04.12.2019 Patentblatt 2019/49**

(21) Anmeldenummer: **14155209.1**

(22) Anmeldetag: **14.02.2014**

(51) Int Cl.:
*G02F 1/01* (2006.01)    *H04B 10/50* (2013.01)

(54) **Erzeugung von Frequenzkämmen und sinc-förmigen Nyquist-Pulsefolgen großer Bandbreite und abstimmbarer Repetitionsrate**

Generation of frequency combs and sine shaped nyquist pulse sequences of wide bandwidth and tunable repetition rate

Génération de peignes de fréquence et de séquences d'impulsions de forme sinc à grande largeur de bande et taux de répétition pouvant être ajusté

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.08.2015 Patentblatt 2015/34**

(73) Patentinhaber: **Deutsche Telekom AG**
**53113 Bonn (DE)**

(72) Erfinder: **Schneider, Thomas**
**14552 Michendorf (DE)**

(74) Vertreter: **Braun-Dullaeus Pannen Emmerling Patent- & Rechtsanwaltspartnerschaft mbB Platz der Ideen 2 40476 Düsseldorf (DE)**

(56) Entgegenhaltungen:
**US-A1- 2005 271 093**

- **MARCELO A. SOTO ET AL: "Optical sinc-shaped Nyquist pulses of exceptional quality", NATURE COMMUNICATIONS, Bd. 4, 4. Dezember 2013 (2013-12-04), XP055126761, DOI: 10.1038/ncomms3898**
- **PREUSSLER STEFAN ET AL: "Tunable generation of ultra-narrow linewidth millimeter and THz-waves and their modulation at 40 Gbd", 2013 IEEE INTERNATIONAL TOPICAL MEETING ON MICROWAVE PHOTONICS (MWP), IEEE, 28. Oktober 2013 (2013-10-28), Seiten 119-122, XP032559853, DOI: 10.1109/MWP.2013.6724034 [gefunden am 2014-01-24]**

**Beschreibung**

Die Erfindung betrifft ein Verfahren und eine Vorrichtung zur Erzeugung eines optischen Frequenzkamms, insbesondere mit beliebiger Bandbreite und beliebigem Abstand zwischen den Frequenzlinien, und zur Erzeugung sinc-förmiger Nyquist-Pulsfolgen beliebiger Bandbreite und Repetitionsrate.

Im Jahre 2005 erhielten Theodor W. Hänsch und John L. Hall den Nobelpreis für Physik für die Präzisionsspektroskopie auf der Basis hoch-genauer optischer Frequenzkämme. Mit solchen Frequenzkämmen lassen sich nicht nur Naturkonstanten mit hoher Genauigkeit messen, es ist auch möglich, den Unterschied zwischen Materie und Antimaterie zu bestimmen. Darüber hinaus sind solche Frequenzkämme in technischen Anwendungen von großer Bedeutung. So beruht beispielsweise die Datenübertragung in Glasfasern vermittels des "wavelength division multiplexing" (WDM) auf einem Frequenzkamm. Zudem benötigen viele andere technische Anwendungen, wie radio over fiber Systeme, die Mikrowellenphotonik und die Quasi-Lichtspeicherung präzise, durchstimmbare Frequenzkämme.

Die Erzeugung von Frequenzkämmen ist beispielsweise aus US 2005/0271093 A1 bekannt.

Für solche Frequenzkämme gilt: Haben alle Frequenzen des Frequenzkamms eine feste Phasenbeziehung zueinander, so ist die Zeitrepräsentation des Kamms eine Pulsfolge. Wenn darüber hinaus alle Frequenzen dieselbe Amplitude und dieselbe oder eine linear verschobene Phase haben und gleichzeitig ungewollte Frequenzanteile stark unterdrückt sind, so ist die Zeitrepräsentation dieses quasi rechteckförmigen Frequenzkamms eine sinus cardinalis (sinc)-Pulsfolge, wobei gilt: sinc (x) = sin(x)/x. Schließlich ist die sinc-Funktion die Fouriertransformierte der Rechteckfunktion.

Um in zukünftigen Kommunikationsnetzen die Datenraten steigern zu können, sind sinc-Pulse von besonderer Bedeutung, da sie die Informationsübertragung mit maximaler Symbolrate ermöglichen. Während reine sinc-Pulse nichtkausal und daher nicht realisierbar sind, lässt sich hingegen eine sinc-Pulsfolge über einen Frequenzkamm realisieren. Diese Pulsfolge hat dieselben Vorteile für die Kommunikation, wie die einzelnen Pulse. Da die Pulse einer sinc-Pulsfolge das Nyquist ISI Kriterium erfüllen, werden sie auch als Nyquist Pulse bezeichnet.

In der Veröffentlichung "Optical sinc-shaped Nyquist pulses of exceptional quality", von Marcelo A. Soto, Mehdi Alem, Mohammad Amin Shoaie, Armand Vedadi, Camille-Sophie Bres, Luc Thevenaz und Thomas Schneider, wird eine Möglichkeit zur Herstellung von Nyquist Pulsfolgen beschrieben. Dazu wird in einer Ausführungsform mittels eines Lasers ein Frequenzkamm mit neun Linien erzeugt, indem die dem Laser entnommene einzelne Linie durch Modulation zwei Seitenlinien erhält, wobei durch eine zweite Modulationskaskade diese drei Linien ihrerseits mit jeweils zwei Seitenlinien ausgestattet werden. Alle solchermaßen erzeugten Linien haben gleichen Abstand. Um jedoch die notwendige annähernd gleiche Phase zwischen den Linien zu erzeugen, muss die Phasendifferenz zwischen den modulierenden Hochfrequenzsignalen sehr genau eingestellt werden, um Laufzeitunterschiede zu kompensieren. Zudem ist die Bandbreite durch die Modulatoren auf eine recht geringe von rund 160 GHz beschränkt.

Aus der Veröffentlichung "Tunable generation of ultra-narrow linewith millimeter and THz-waves and their modulationb at 40 Gbd" von Stefan Preussler et al, 2013 IEEE International Topical Meeting on Microwave Photonics (MWP), IEEE, 28. Oktober 2013, ist die Erzeugung eines einstellbaren Femtosekunden Frequenzkammes durch Filterung mittels stimulierter Brillouin Streuung bekannt.

Nun ist es bekannt, dass modengelockte Laser einen Frequenzkamm erzeugen. Ein solcher hat jedoch keine Rechteckform und der Abstand zwischen den einzelnen Frequenzlinien ist durch die Repetitionsrate des Lasers fest vorgegeben. Das macht diese Frequenzkämme für viele Anwendungen ungeeignet. Eine andere Möglichkeit besteht darin, Phasenmodulatoren miteinander, oder mit Intensitätsmodulatoren zu koppeln und so einen Frequenzkamm zu erzeugen. Mit Phasenmodulatoren lassen sich allerdings keine rechteckförmigen Frequenzkämme erzeugen. Zudem ist die maximal mit diesen Frequenzkämmen erzielbare Bandbreite durch die Bandbreite der verwendeten Modulatoren begrenzt.

Bislang konnten nur annähernd ideale sinc-Pulse mit einer maximalen Bandbreite von rund 160 GHz (s.o.) erzeugt werden, was einer zeitlichen full-width-at-halfmaximum (FWHM) Dauer der Pulse von rund 6 ps entspricht. Außerdem ist die maximale Anzahl der Linien eines Frequenzkamms beschränkt, wobei die Anzahl der Linien die Repetitionsrate der sinc-Pulse definiert. Für spezielle Anwendungen wie beispielsweise für die Erzeugung beliebiger Pulsformen sind jedoch eine möglichst hohe Anzahl der Linien und eine geringe Dauer der Pulse erwünscht.

Aufgabe der Erfindung ist es, ein verbessertes Verfahren sowie eine verbesserte Vorrichtung zur Herstellung von Frequenzkämmen und Pulsfolgen insbesondere von sinc-Pulsfolgen beliebig einstellbarer Repetitionsrate und hoher Bandbreite bereitzustellen, das mit technisch einfachen Mitteln realisiert und entsprechend zu Zwecken der Kommunikation eingesetzt werden kann.

Die Aufgaben werden durch ein Verfahren nach Anspruch 1 und eine Vorrichtung nach Anspruch 8 gelöst. Bevorzugte Ausgestaltungen ergeben sich aus den jeweiligen Unteransprüchen,

Die Grundidee der Erfindung liegt darin, aus einer Lichtquelle, insbesondere einem modengekoppelten Laser, einzelne Linien mit äquidistantem Abstand zu extrahieren, die dann als Eingangslinien für einen oder mehrere kaskadierte Modulatoren dienen. Durch die Modulation werden wiederum neue Seitenbänder erzeugt, wobei die Anzahl der extrahierten Linien und damit die Breite des Kamms frei wählbar sind. Der Frequenzabstand ist durch die Modulation veränderbar. Es ist jedoch darauf zu achten, dass der Frequenzabstand zwischen den Linien über die Modulation gleich eingestellt wird. Insofern hängt der wählbare Frequenzabstand auch vom Abstand der ursprünglich extrahierten Linien ab. Die Bandbreite des erfindungsgemäß erzeugten Frequenzkamms ist damit durch die Bandbreite des ersten, durch den modengekoppelten Laser erzeugten Frequenzkamms vorgegeben und kann im THz-Bereich liegen. Gleichzeitig ermöglicht das Filtern eine Anpassung der Amplituden der einzelnen Frequenzen.

Dabei ist es zur Erzeugung der Pulsfolgen, insbesondere von sin(x)/x-förmigen Pulsfolgen, vorteilhaft, die Repetitionsrate der Lichtquelle und die Modulationsfrequenzen in ihren Phasen zueinander zu synchronisieren.

Dabei geht die erfindungsgemäße Vorgehensweise über ein reines optisches Filtern eines ersten Frequenzkamms zur Erzeugung eines zweiten Frequenzkammes beliebiger Bandbreite hinaus. Solchermaßen erzeugte Frequenzkämme wären nicht rechteckförmig, da optische Filter keine rechteckförmige Bandbreite aufweisen. Somit wäre es insbesondere nicht möglich, sin(x)/x-Pulsfolgen zu erzeugen. Zudem wäre der Abstand zwischen den Frequenzen des Kamms fest durch die Repetitionsrate des Lasers bestimmt, die sich nur in geringem Umfang verändern lässt. Mit der Erfindung lässt sich hingegen der Frequenzabstand durch die äußere Modulationsfrequenz einstellen und es kann ab einer bestimmten Frequenz, die im nachfolgenden Beispiel bei 4 GHz liegt, jeder beliebige Abstand eingestellt werden.

Der besondere Vorteil der erfindungsgemäßen Vorgehensweise liegt somit darin, dass sich im Prinzip sinc-Pulsfolgen beliebiger Bandbreite und beliebiger Repetitionsrate herstellen lassen. Gleichzeitig können rechteckförmige Kämme mit beliebiger Anzahl von Frequenzlinien und beliebigem Abstand zwischen den einzelnen Frequenzen hergestellt werden. Werden die Phasen der elektrischen Ansteuersignale kontrolliert eingestellt, so ist die Zeitrepräsentation eines solchen Kamms eine ideale sinc-förmige Pulsfolge.

Die Erfindung wird anhand der Figuren nachfolgend näher erläutert. Es zeigen:

**Figur 1**    schematisch den Aufbau einer Anordnung zur Erzeugung eines rechteckigen optischen Frequenzkamms;

**Figur 2**    die Frequenzspektren in unterschiedlichen Stadien des Verfahrens

        a) nach der Erzeugung des Lichts durch eine Quelle,
        b) nach der Filterung,
        c) nach einer ersten Modulation,
        d) nach einer zweiten Modulation;

**Figur 3**    schematisch eine alternative Anordnung zur Erzeugung eines rechteckigen optischen Frequenzkamms;

**Figur 4**    ein Frequenzspektrum des zweiten modulierten Frequenzkamms;

**Figur 5**    ein weiteres Frequenzspektrum des zweiten modulierten Frequenzkamms;

**Figur 6**    eine sinc-Pulsfolge umfassend einen zweiten modulierten Frequenzkamm.

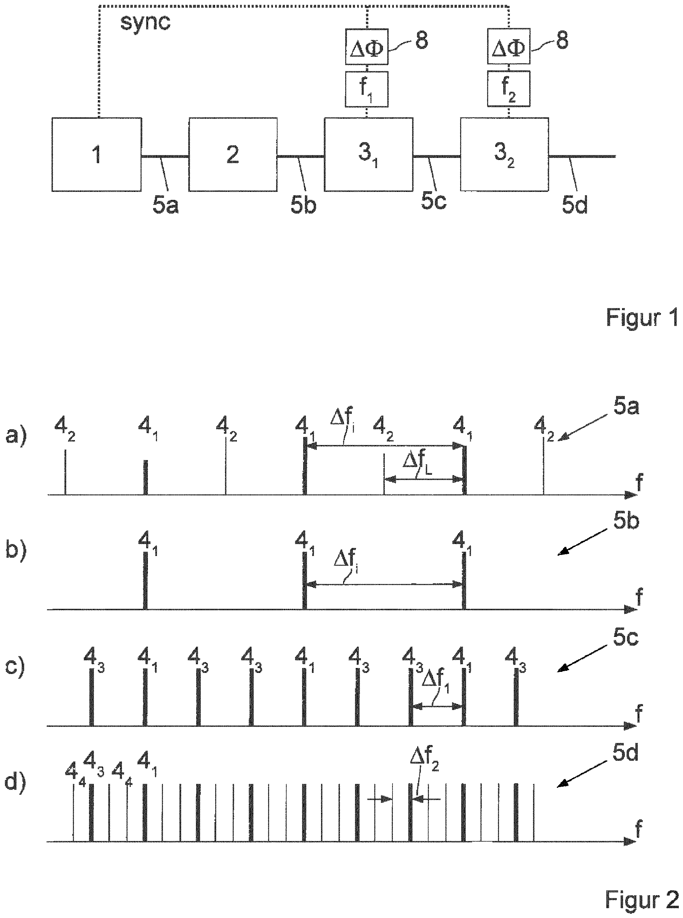

Das Grundprinzip zur Erzeugung eines rechteckförmigen optischen Frequenzkamms beliebiger Bandbreite, Linienzahl und Frequenzabstand ist in Figur 1 gezeigt. Die dort schematisch vorgestellte Vorrichtung umfasst eine Lichtquelle 1, einen daran anschließenden optischen Filter 2 und nachfolgende optische Modulatoren $3_1$, $3_2$. Als Lichtquelle 1 kann jedes System dienen, mit dem sich ein optischer Frequenzkamm 5 erzeugen lässt, wobei ein modengekoppelter Laser (MLL) besonders dafür geeignet ist. Mit den Frequenzgeneratoren $f_1$, $f_2$ und einer zusätzlich an den Modulatoren anliegenden BIAS-Spannung lassen sich die Modulatoren $3_1$, $3_2$ derart einstellen, dass alle Linien nahezu gleiche Amplitude und Phase haben. Zudem lassen sich Seitenbänder höherer Ordnung unterdrücken.

Die Lichtquelle 1 wird mit den Phasen der Generatoren $f_1$, $f_2$ vermittels Phasenstellern 8 insofern synchronisiert (gestrichelte Linie), als die Repetitionsrate der Lichtquelle und die Modulationsfrequenzen in ihren Phasen zueinander synchron sind. An Stelle mehrerer optischer Modulatoren und Generatoren kann auch ein einziger Modulator und Generator verwendet werden, der mit mehreren RF-Frequenzen betrieben wird. Für die erfindungsgemäße Pulserzeugung ist es jedoch erheblich, dass die Synchronisation zwischen den Phasen des ursprünglichen Kamms und denen der oder des RF-Generators sicher gestellt ist.

Das Verfahren zum Erzeugen eines optischen Frequenzkamms (5c, 5d) mit einer definierten Zahl von Frequenzkammlinien ($4_1$, $4_3$, $4_4$) umfasst nun die folgenden Verfahrensschritte:

Zunächst umfasst der durch die Quelle 1 erzeugte Eingangsfrequenzkamm 5a eine Vielzahl von Eingangsfrequenzkammlinien $4_1$, $4_2$. Der Frequenzkamm 5 lässt sich insbesondere mit Hilfe eines modengekoppelten Lasers (MLL) oder eines Kammerzeugers erzeugen. Mit dem Bezugzeichen $4_1$ werden die zu selektierenden respektive die gefilterten Frequenzkammlinien bezeichnet, mit dem Bezugzeichen $4_2$ werden die nicht selektierten Frequenzkammlinien bezeichnet.

Der durch die Lichtquelle 1 erzeugte, noch nicht rechteckige Eingangsfrequenzkamm 5a ist in Figur 2a gezeigt. Die einzelnen Eingangsfrequenzkammlinien $4_1$, $4_2$ des Eingangsfrequenzkamms 5a weisen unterschiedlich hohe Amplituden auf und sind daher mit unterschiedlichen Längen gezeichnet. Der Frequenzunterschied $\Delta f_L$ zwischen den einzelnen noch ungefilterten Eingangsfrequenzkammlinien $4_1$, $4_2$ des Eingangsfrequenzkamms 5a ist in geringem Maße durch Änderung der Repetitionsrate des Lasers 1 veränderbar.

Aus dem durch den Laser 1 erzeugten Eingangsfrequenzkamm 5a werden mit Hilfe des Filters 2 einzelne, nämlich die mit dem Bezugszeichen $4_1$ versehenen Frequenzkammlinien heraus gefiltert, die jeweils einen identischen Abstand von $\Delta f_I=(n_k+1)^*\Delta f_L$ aufweisen (Figur 2b), wobei $n_k$ eine natürliche Zahl (0, 1, 2, 3, ...) ist und der Anzahl von nicht heraus gefilterten Frequenzkammlinien $4_2$ zwischen den jeweils zwei heraus gefilterten Eingangsfrequenzkammlinien $4_1$ entspricht. Im vorliegenden Fall ist $n_k=1$, so dass gilt: $\Delta f_i=2\Delta f_L$. Als Filter 2 kann jede Form von optischem Filter dienen, die in der Lage ist, einzelne Frequenzkammlinien $4_1$ aus dem Frequenzkamm 5a zu selektieren. Das bedeutet, dass die Filterbandbreite $\Delta f_F$ des Filters 2 kleiner sein muss, als der Frequenzunterschied zwischen den einzelnen Frequenzkammlinien 4 des ursprünglichen Frequenzkamms 5, so dass gilt: $\Delta f_F<\Delta f_L$.

Die meisten optischen Filter 2 haben Filterbandbreiten von $\Delta f_F > 10$ GHz. Bevorzugt werden jedoch Eingangsfrequenzkämme 5a mit möglichst kleinem Abstand $\Delta f_L$ erzeugt. Beispielsweise erzeugt ein femtosekunden- (fs)- Faserlaser Frequenzkämme 5 mit einem Frequenzkammlinienabstand $\Delta f_L$ zwischen 80 MHz und 100 MHz. Frequenzkammlinien einer solchen Quelle werden daher bevorzugt mit Hilfe der polarization-pulling assisted stimulated Brillouin scattering (PPA-SBS) als Filter 2 extrahiert, da eine PPA-SBS Filterbandbreiten von $\Delta f_F = 3$ MHz oder weniger aufweisen kann.

Durch die Einstellung des Filters 2 - bei Filterung mittels PPA-SBS insbesondere durch die Einstellung der Stärke der entsprechenden Pumpe - werden die zu selektierenden Eingangsfrequenzkammlinien $4_1$ so extrahiert, dass sie alle dieselbe Leistung aufweisen. Visualisiert ist das in Figur 2b durch selektierte Eingangsfrequenzkammlinien $4_1$ mit identischer Länge.

Die selektierten Eingangsfrequenzkammlinien $4_1$ werden von dem ersten Modulator $3_1$ mit einer Frequenz $\Delta f_1$ moduliert. Als Modulatoren 3 können beispielsweise Intensitäts- oder Phasenmodulatoren genutzt werden. Für die Erzeugung von Nyquist-Pulsen sind vor allem Mach-Zehnder-Intensitätsmodulatoren von Vorteil, da diese zwei Linien gleicher Amplitude und gleicher Phase erzeugen können und Frequenzlinien höherer Ordnung durch eine entsprechende Einstellung der Leistung des Modulationssignals (RF-power) und der Bias-Spannung effektiv unterdrücken.

Figur 1c zeigt einen ersten modulierten Frequenzkamm 5c nach Durchlauf des ersten Mach-Zehnder-Modulators $3_1$. Um jede aus der Quelle 1 extrahierte Frequenzkammlinie $4_1$ herum entstehen durch diese Modulation zwei Seitenbänder $4_3$ als erste modulierte Frequenzkammlinien mit einem Frequenzabstand von $\Delta f_1=1/3\Delta f_i$. Der zweite Modulator $3_2$ kann ein Intensitäts- oder Phasenmodulator sein. Soll der so erzeugte zweite modulierte Frequenzkamm 5d aber zur Erzeugung von Nyquist-Pulsfolgen genutzt werden, so wird vorteilhafterweise ein MZM eingesetzt. Dieser wird mit einer Frequenz von $\Delta f_2 = 1/3\ \Delta f_1 = 1/9\ \Delta f_i$ betrieben und erzeugt um jede optische (am zweiten Modulator $3_2$ anliegende) Frequenzkammlinie $4_1$, $4_3$ zwei neue (zweite modulierte) Frequenzkammlinien $4_4$. Das Ergebnis ist ein flacher, annähernd ideal rechteckförmiger Frequenzkamm 5d mit $l=n_l*3^n$ Linien 4. Dabei ist $n_l$ die Anzahl der von der Quelle 1 ursprünglich extrahierten Frequenzen $4_1$ und n die Anzahl der Modulatoren.

Auf diese Weise werden durch Modulation der gefilterten Frequenzkammlinien ($4_1$) Seitenbandlinien erzeugt, wobei die Seitenbandlinien ($4_2$, $4_3$) durch die Modulation derart eingestellt werden, dass alle Linien ($4_1$, $4_2$, $4_3$) einen identischen Frequenzabstand ($\Delta f_2$) zueinander aufweisen. Die größere Strichstärke der Frequenzkammlinien $4_1$, $4_3$ gegenüber den Frequenzkammlinien $4_2$, $4_4$ in Figur 2 dient nur zur verbesserten visuellen Unterscheidung der entsprechenden Frequenzkammlinien und ist technisch ohne Bedeutung.

In vorliegenden Ausführungsbeispiel ist $n_l = 3$ und n = 2, so dass die Anzahl der Frequenzkammlinien l = 27 ist. Werden mehr als zwei Modulatoren eingesetzt, so steigt die Anzahl 1 der Frequenzkammlinien 4 im modulierten Frequenzkamm 5 potenziell. Werden durch den Filter 2 mehr ursprüngliche Frequenzen $4_1$ extrahiert, so steigt die Anzahl I der Frequenzkammlinien 4 im Frequenzkamm 5 hingegen linear. Anstelle zweier Modulatoren 3 - wie in Figur 1 - gezeigt lässt sich auch ein einziger Modulator einsetzen, der von mehreren Modulationsfrequenzen angetrieben wird. Es können auch Seitenbänder höherer Ordnung angeregt werden.

Werden nur zwei Seitenbänder erster Ordnung angeregt, so weist der modulierte Frequenzkamm 5c, 5d eine Bandbreite von $B=(l-1)*1/3^n*\Delta f_i$ auf. Diese lässt sich durch l, n und $\Delta f_i$ verändern. Der Frequenzabstand zwischen den einzelnen Frequenzkammlinien im modulierten Frequenzkamm ist $\Delta f = 1/3^n*\Delta f_l$. In Figur 1d ist (mit n=2) folglich $\Delta f = \Delta f_2 = 1/9\ x\ \Delta f_i$ Demnach lässt sich der Frequenzabstand zwischen den Frequenzen im Kamm durch n und $\Delta f_i$ steuern. Die Anzahl der Modulatoren n zu erhöhen ist relativ aufwändig, während $\Delta f_i$ bei einem MLL einem Vielfachen seiner Repetitionsrate entspricht. In den meisten MLL lässt sich diese um +/- 1% ändern. Demnach kann die Frequenzdifferenz in Schritten von $\Delta f_i=\Delta f_L+-(n_k+1)^*\ 0.01*\Delta f_L$ verändert werden.

Das bedeutet bei einem fs-Faserlaser mit $\Delta f_L =80$ MHz, dass falls 40 Linien zwischen den beiden extrahierten liegen (in Figur 2a würde das bedeuten, dass zwischen zwei zu extrahierenden Eingangsfrequenzkammlinien $4_1$ zumindest 40 nicht zu selektierende Frequenzkammlinien $4_2$ vorhanden sind), die extrahierte Linie in ihrer Frequenz so stark verändert werden kann, dass sie der Frequenz der vorherigen oder nächsten Linie entspricht.

Demnach lässt sich ein modulierter Frequenzkamm mit beliebiger Bandbreite, Anzahl der Linien und Frequenzabstand zwischen den Linien mit einem fs-Faserlaser erzeugen, wenn $\Delta f_i > 4$ GHz ist. Für kleinere Frequenzen sind nicht alle Frequenzabstände erreichbar.

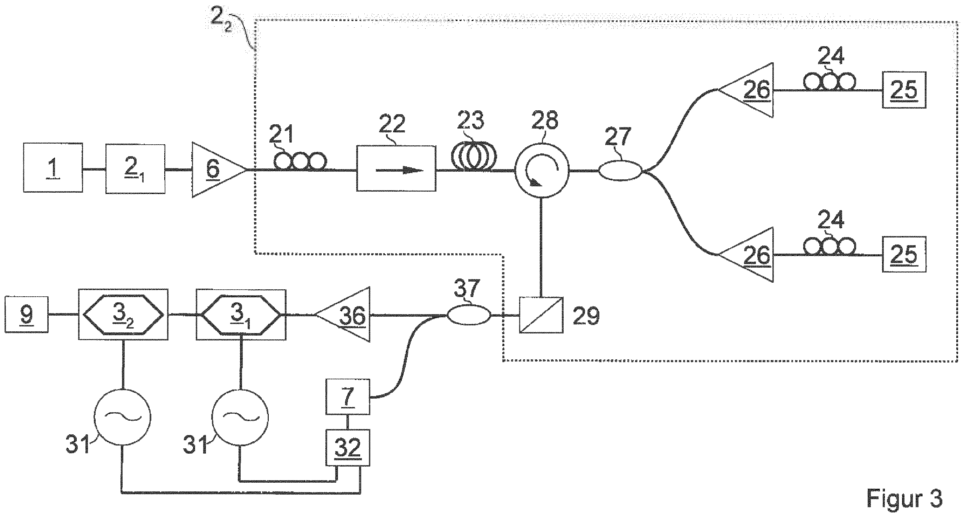

Eine mögliche Anordnung zur Durchführung der Erfindung ist in Figur 3 gezeigt. Als Quelle dient hier ein fs-Faserlaser 1 mit einer Repetitionsrate von $\Delta f_L = 80$ MHz. Um den Signal-zu-Rauschabstand nach einem Vorverstärker 6 zu verbessern wird ein Vorfilter $2_1$ dazu benutzt, nur einen Teil des gesamten vom Laser erzeugten Spektrums passieren zu lassen. Als weiterer Filter $2_2$ dient in der Ausgestaltung nach Figur 3 die PPA-SBS. Die SBS ist ein Verstärkungsprozess bei dem eine Pumpwelle die sich in einer Richtung eines SBS Mediums 23 ausbreitet, einen schmalbandigen Gewinn für eine gegenläufige, in der Frequenz nach unten verschobene Signalwelle erzeugt. Die Frequenzverschiebung zwischen Pump- und Signalwelle beträgt typischerweise 11 GHz und die Gewinnbandbreite 10 - 30 MHz für Pumpwellen von 1550 nm und Standard singlemode Glasfasern (SSMF). Diese Bandbreite kann auf 3 MHz verringert werden. Als SBS-Medium dient eine SSMF 23. Es werden zwei oder mehr Pumpwellen durch die Laserdioden 25 erzeugt, durch jeweilige Verstärker 26 verstärkt und über einen N:1 Koppler 27 (wobei N der Anzahl der angeschlossenen Laserdioden entspricht) und einen Zirkulator 28 in die SSMF 23 eingespeist. Die Wellenlänge der beiden Laserdioden 25 wird so eingestellt, dass sie zwei Frequenzkammlinien aus dem Frequenzkamm 5 des Lasers 1 verstärkt. Diese Wellenlänge kann durch diverse elektronische Methoden auf die zu verstärkenden Kammlinien gelockt werden.

Der polarization pulling Effekt der SBS bedeutet, dass die Pumpwelle die Polarisation der Signalwelle in Richtung ihrer eigenen Polarisation dreht. Dementsprechend wird die Polarisation des durch die Quelle 1 erzeugten Kamms über einen Polarisationssteller 21, dem ein Isolator 22 folgt, so eingestellt, dass sie senkrecht zu einem Polarisationsfilter 29 steht. Ohne SBS kann also keine Kammkomponente diesen Filter passieren. Die Polarisation der Pumpwellen wird über jeweils den Pumpwellen zugeordneten Polarisationsstellern 24 so eingestellt, dass sie parallel zu PBS ist. Durch die SBS werden also zwei, oder mehr Frequenzkammlinien des Frequenzkamms verstärkt und ihre Polarisationsrichtung wird parallel zum PBS gedreht. Im Ergebnis können nur die durch SBS verstärkten Frequenzkammlinien den PBS passieren.

Die extrahierten Eingangsfrequenzkammlinien $4_1$ werden über einen Verstärker 36 verstärkt und dann wie in Figuren 1 und 2 beschrieben mit den beiden Modulatoren $3_1$, $3_2$ moduliert. Da sich die Repetitionsrate des Lasers ändern kann bzw. lässt, wird die Frequenz zwischen den extrahierten Linien $\Delta f_i$ mit Hilfe einer Photodiode 7 gemessen. Dafür wird ein Anteil der extrahierten Frequenzkammlinien $4_1$ mittels eines Splitter 37 in Richtung der Photodiode abgezweigt. Die Steuerungsfrequenzen mit denen die beiden Modulatoren $3_1$, $3_2$ angesteuert werden, werden durch zwei RF-Generatoren 31 erzeugt. Die Steuerungsfrequenzen ergeben sich aus $1/3 * \Delta f_i$, und $1/9 * x \Delta f_i$ und werden mit Hilfe eines Computers 32 berechnet. Der optische Spektrumsanalysator 9 dient im vorliegenden Ausführungsbeispiel zur Anzeige der Ergebnisse. An dieser Stelle würden die Pulse zur weiteren Verwendung ausgekoppelt werden

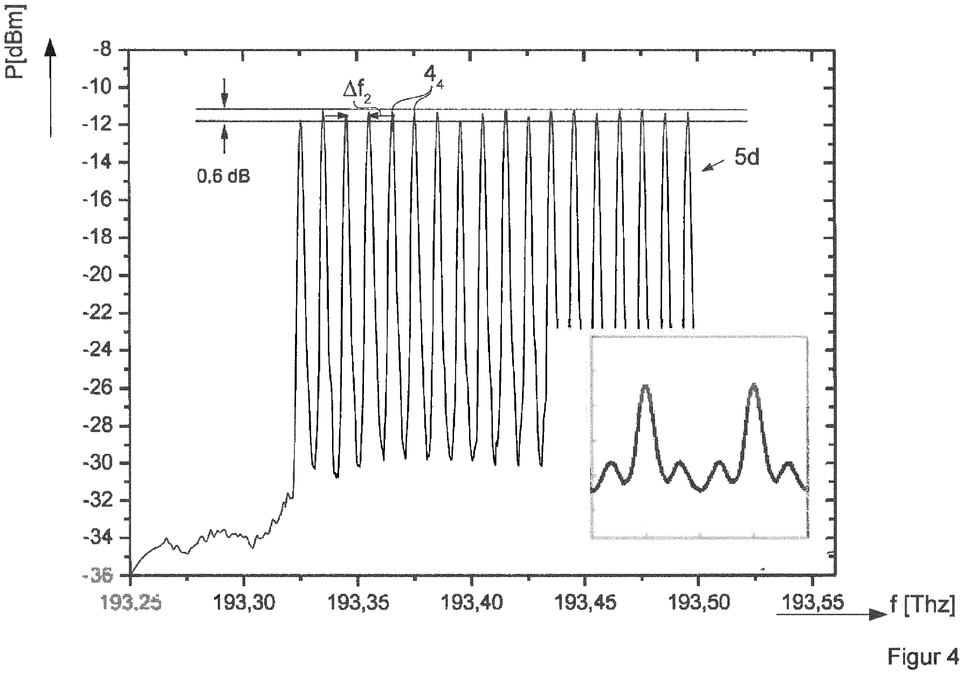

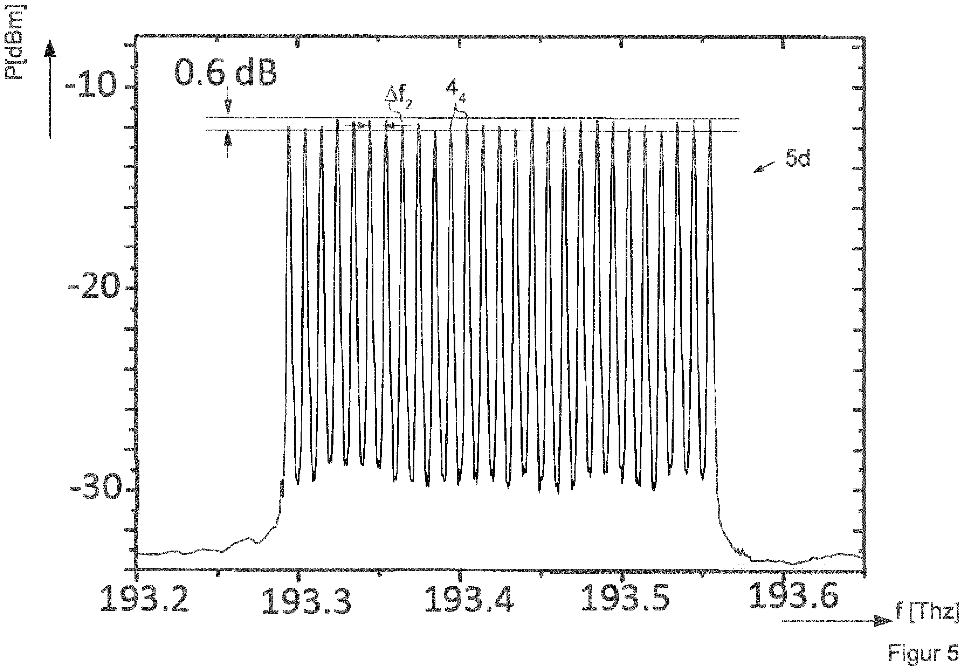

Die Figuren 4 und 5 zeigen Ergebnisse des vorgenannten Verfahrens. In Figur 4 ist ein modulierter zweiter Frequenzkamm mit 18 Frequenzkammlinien $4_4$, einem Frequenzabstand $\Delta f_2$ zwischen den Frequenzkammlinien $4_4$ von 10 GHz und einer daraus folgenden Gesamtbandbreite von 170 GHz gezeigt. Das Insert zeigt den zugehörigen Lichtpuls im Zeitbereich. Da im Zeitbereich Pulse zu sehen sind, sind die einzelnen Frequenzkomponenten des Kamms in der Phase zueinander gelockt. Figur 5 zeigt einen weiteren zweiten modulierten Frequenzkamm 5d mit 27 modulierten Frequenzkammlinien $4_4$, einem Frequenzabstand $\Delta f_2$ zwischen den Linien $\Delta f_2$ von 10 GHz und einer Gesamtbandbreite von 260 GHz.

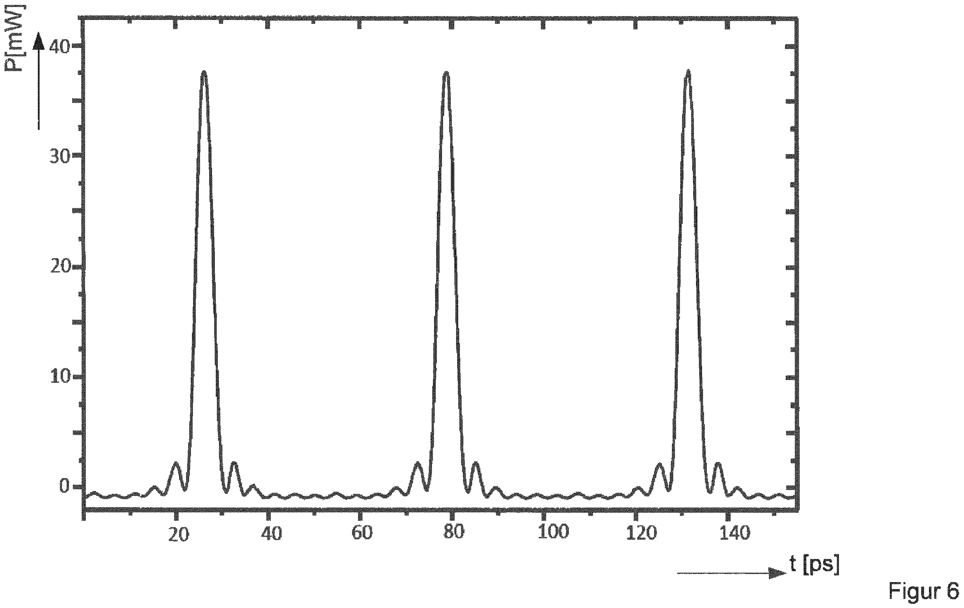

Werden die Phasen der Generatoren 31, welche die Modulatoren 3 ansteuern, zueinander und mit der Quelle 1 synchronisiert, wie es in der Figur 1 mit gestrichelter Linie gezeigt ist, und wird die Phasendifferenz zwischen ihnen mit Hilfe eines Phasenstellers 8 eingestellt, so stellt ein rechteckiger Frequenzkamm im Zeitbereich eine sinc-Pulsfolge dar. Figur 6 zeigt eine solche sinc-Pulsfolge für 12 Kammlinien mit einem Frequenzabstand von 19.04 GHz zueinander im Zeitbereich. Obwohl möglich wurde hier nicht der Aufbau nach Figur 3 verwendet; vielmehr wurde als Quelle ein Kammgenerator benutzt und die Linien vor den Modulatoren wurden mit einem optischen Filter herausgefiltert, wie in Figur 1 gezeigt.

**Bezugzeichen liste**

1     Quelle
2     Filter
3     Modulator
$4_1$     selektierte Eingangsfrequenzkammlinie
$4_2$     nicht selektierte Eingangsfrequenzkammlinie
$4_3$     erste modulierte Frequenzkammlinie

| | |
|---|---|
| $4_4$ | zweite modulierte Frequenzkammlinie |
| 5a | Eingangsfrequenzkamm |
| 5b | selektierter Frequenzkamm |
| 5c | erster modulierter Frequenzkamm |
| 5d | zweiter modulierter Frequenzkamm |
| 6 | Vorverstärker |
| 7 | Photodiode |
| 8 | Phasensteller |
| 9 | optischer Spektrumsanalysator |
| 21 | Polarisationssteller |
| 22 | Isolator |
| 23 | optisches Medium |
| 24 | Polarisationssteller |
| 25 | Laserdioden |
| 26 | Verstärker |
| 27 | Koppler |
| 28 | Zirkulator |
| 29 | Polarisationsfilter |
| 31 | RF-Generator |
| 32 | Computer |
| 36 | Verstärker |
| 37 | Splitter |
| $\Delta f_L$ | Abstand der Eingangsfrequenzkammlinien |
| $\Delta f_i$ | Abstand der selektierten Eingangsfrequenzkammlinien |
| $\Delta f_1$ | Abstand der Frequenzkammlinien des ersten modulierten Frequenzkamms |
| $\Delta f_2$ | Abstand der Frequenzkammlinien des zweiten modulierten Frequenzkamms |
| l | Anzahl der Frequenzkammlinien des ersten modulierten Frequenzkamms |
| $n_k$ | Anzahl der nicht selektierten Eingangsfrequenzkammlinien zwischen zwei benachbarten selektierten Eingangsfrequenzkammlinien |
| n | Anzahl der in Reihe geschalteten Modulatoren |

**Patentansprüche**

1.  Verfahren zum Erzeugen eines optischen Frequenzkamms (5c, 5d) mit einer definierten Zahl von Frequenzkammlinien ($4_1$, $4_3$, $4_4$) mit zueinander einstellbarem Abstand umfassend die folgenden Verfahrensschritte:

    Erzeugen eines Eingangsfrequenzkamms (5a) mit einer Lichtquelle (1), insbesondere mit einem modengelockten Laser, wobei der Eingangsfrequenzkamm (5a) eine Vielzahl von Eingangsfrequenzkammlinien ($4_1$, $4_2$) mit einem Abstand von $\Delta f_L$ aufweist.
    Herausfiltern einzelner Frequenzkammlinien ($4_1$) mit identischem Frequenzabstand ($\Delta f_i$) aus dem Eingangsfrequenzkamm (5a), wobei gilt $\Delta f_i = (n_k + 1) * \Delta f_L$ mit $n_k = 1, 2, 3, ....$
    Modulation der gefilterten Frequenzkammlinien ($4_1$) zur Erzeugung von Seitenbandlinien, wobei die Seitenbandlinien ($4_3$) durch die Modulation derart eingestellt werden, dass Frequenzkammlinien und Seitenbandlinien ($4_1$, $4_3$) einen identischen Frequenzabstand ($\Delta f_1$) zueinander aufweisen.

2.  Verfahren nach Anspruch 1,
    **gekennzeichnet durch,**
    Modulation der gefilterten Frequenzkammlinien ($4_1$) zur Erzeugung erster Seitenbandlinien ($4_1$, $4_3$) und nachfolgende Modulation der ersten Seitenbandlinien ($4_1$, $4_3$) zur Erzeugung von zweiten Seitenbandlinien, wobei die Seitenbandlinien ($4_1$, $4_3$) durch die jeweilige Modulation derart eingestellt werden, dass Frequenzkammlinien und Seitenbandlinien ($4_1$, $4_3$) einen identischen Frequenzabstand ($\Delta f_1$) zueinander aufweisen.

3.  Verfahren nach Anspruch 1,
    **gekennzeichnet durch,**
    Modulation der gefilterten Frequenzkammlinien mit mehreren Frequenzen gleichen Abstands zur Erzeugung mehrerer Seitenbandlinien.

**4.** Verfahren nach einem der vorherigen Ansprüche,
**dadurch gekennzeichnet,**
**dass** die Seitenbandlinien ($4_1$, $4_3$) durch die Modulation derart eingestellt werden, dass Frequenzkammlinien und Seitenbandlinien ($4_1$, $4_3$) eine nahezu identische Amplitude aufweisen.

**5.** Verfahren nach einem der vorherigen Ansprüche,
**dadurch gekennzeichnet,**
**dass** zur Erzeugung der Pulsfolgen, insbesondere von sin(x)/x-förmigen Pulsfolgen, die Repetitionsrate der Lichtquelle und die Modulationsfrequenzen in ihren Phasen zueinander synchronisiert werden.

**6.** Verfahren nach einem der vorherigen Ansprüche,
**dadurch gekennzeichnet,**
**dass** der Frequenzabstand ($\Delta f_L$) des Eingangsfrequenzkamms (5a) durch Variation der Repetitionsrate des modengelockten Lasers verändert wird.

**7.** Verfahren nach einem der vorherigen Ansprüche,
**dadurch gekennzeichnet,**
**dass** einzelne Frequenzkammlinien ($4_1$) aus dem Eingangsfrequenzkamm (5a) mittels PPA-SBS ($2_2$) ("Polarization-Pulling Assisted Stimulated Brillouin Scattering") herausgefiltert werden.

**8.** Vorrichtung zum Erzeugen eines optischen Frequenzkamms (5c, 5d) mit einer definierten Zahl von Frequenzkammlinien ($4_1$, $4_3$, $4_4$) mit zueinander einstellbarem Abstand umfassend
einen modengekoppelten Laser (MLL) zum Erzeugen eines Eingangsfrequenzkamms (5a), der eine Vielzahl von Eingangsfrequenzkammlinien ($4_1$, $4_2$) mit einem Abstand von $\Delta f_L$ aufweist,
einen nachfolgenden optischen Filter (2) zum Herausfiltern einzelner Frequenzkammlinien ($4_1$) mit identischem Frequenzabstand ($\Delta f_i$) aus dem Eingangsfrequenzkamm (5a), wobei gilt $\Delta f_i = (n_k + 1) * \Delta f_L$ mit $n_k = 1, 2, 3, ....$ und
mindestens einen über einen Generator angesteuerten optischen Modulator (3), zur Modulation der gefilterten Frequenzkammlinien ($4_1$) zur Erzeugung von Seitenbandlinien, die einen identischen Frequenzabstand ($\Delta f_1$) wie die Frequenzkammlinien ($4_1$) aufweisen,
wobei Mittel zur Phasensynchronisation der Repetitionsrate der Lichtquelle (1) und der Modulationsfrequenzen des Generators vorhanden sind.

**9.** Vorrichtung nach Anspruch 8,
**dadurch gekennzeichnet,**
**dass** der Filter (2) auf dem Prinzip der polarization-pulling assisted stimulated Brillouin scattering (PPA-SBS) basiert.

**Claims**

**1.** A method for generating an optical frequency comb (5c, 5d) with a defined number of frequency comb lines ($4_1$, $4_3$, $4_4$) with adjustable spacing to one another, comprising the following method steps:

generating an input frequency comb (5a) with a light source (1), in particular with a mode-locked laser, wherein the input frequency comb (5a) has a plurality of input frequency comb lines ($4_1$, $4_2$) with a spacing of $\Delta f_L$,
filtering individual frequency comb lines ($4_1$) with identical frequency spacing ($\Delta f_i$) out of the input frequency comb (5a), wherein

$$\Delta f_i = (n_k + 1) * \Delta f_L$$

with $n_k = 1, 2, 3, ...,$
modulation of the filtered frequency comb lines ($4_1$) for generating sideband lines, wherein the sideband lines ($4_3$) are adjusted through the modulation so that frequency comb lines and sideband lines ($4_1$, $4_3$) have an identical frequency spacing ($\Delta f_1$) to one another.

**2.** The method according to claim 1,

**characterized by**
modulation of the filtered frequency comb lines ($4_1$) for generating first sideband lines ($4_1$, $4_3$) and subsequent modulation of the first sideband lines ($4_1$, $4_3$) for generating second sideband lines, wherein the sideband lines ($4_1$, $4_3$) are adjusted through the modulation in question so that frequency comb lines and sideband lines ($4_1$, $4_3$) have an identical frequency spacing ($\Delta f_1$) to one another.

3. The method according to claim 1,
**characterized by**
modulation of the filtered frequency comb lines with a plurality of frequencies with the same spacing for generating a plurality of sideband lines.

4. The method according to one of the preceding claims,
**characterized in that**
the sideband lines ($4_1$, $4_3$) are adjusted through the modulation such that frequency comb lines and sideband lines ($4_1$, $4_3$) have a virtually identical amplitude.

5. The method according to one of the preceding claims,
**characterized in that**
for generating pulse sequences, in particular sin (x)/x-shaped pulse sequences, the repetition rate of the light source and the modulation frequencies in their phases are synchronised in relation to one another.

6. The method according to one of the preceding claims,
**characterized in that**
the frequency spacing ($\Delta f_L$) of the input frequency comb (5a) is modified by variation of the repetition rate of the mode-locked laser.

7. The method according to one of the preceding claims,
**characterized in that**
individual frequency comb lines ($4_1$) are filtered out of the input frequency comb (5a) by means of PPA-SBS ($2_2$) (Polarization-Pulling Assisted Stimulated Brillouin Scattering).

8. A device for generating an optical frequency comb (5c, 5d) with a defined number of frequency comb lines ($4_1$, $4_3$, $4_4$) with adjustable spacing to one another, comprising
a mode-coupled laser (MLL) for generating an input frequency comb (5a) that has a plurality of input frequency comb lines ($4_1$, $4_2$) with a spacing of $\Delta f_L$,
a subsequent optical filter (2) for filtering individual frequency comb lines ($4_1$) with identical frequency spacing ($\Delta f_1$) out of the input frequency comb (5a), wherein $\Delta f_i = (n_k + 1) * \Delta f_L$ with $n_k = 1, 2, 3, ...$ and
at least one optical modulator (3) controlled via a generator, for modulation of the filtered frequency comb lines ($4_1$) for generating sideband lines that have a frequency spacing ($\Delta f_i$) identical to the frequency comb lines ($4_1$),
wherein means for the phase synchronisation of the repetition rate of the light source (1) and of the modulation frequencies of the generator are present.

9. The device according to claim 8,
**characterized in that**
the filter (2) is based on the principle of polarization-pulling assisted stimulated Brillouin scattering (PPA-SBS).

## Revendications

1. Procédé, destiné à générer un peigne de fréquences optiques (5c, 5d) pourvu d'un nombre défini de lignes de peigne de fréquences ($4_1$, $4_3$, $4_4$) présentant un écart mutuel réglable, comprenant les étapes de procédé suivantes, consistant à :

   générer un peigne de fréquences d'entrée (5a) avec une source lumineuse (1), notamment un laser verrouillé en mode, le peigne de fréquences d'entrée (5a) comportant une pluralité de lignes de peigne de fréquences d'entrée ($4_1$, $4_2$) présentant un écart de $\Delta f_L$.
   extraire par filtrage identique hors du peigne de fréquences d'entrée (5a) des lignes de peigne de fréquences ($4_1$) individuelles présentant un écart de fréquences ($\Delta f_i$), avec la condition $\Delta f_i = (n_k + 1) * \Delta f_L$ avec $n_k = 1, 2, 3, ....$

moduler les lignes de peigne de fréquences ($4_1$) filtrées pour générer des lignes de bande latérale, les lignes de bande latérale ($4_3$) étant réglées par la modulation de telle sorte que des lignes de peigne de fréquences et des lignes de bande latérale ($4_1$, $4_3$) présentent mutuellement un écart de fréquences ($\Delta f_1$) identique.

2. Procédé selon la revendication 1,
   **caractérisé par**
   une modulation des lignes de peigne de fréquences ($4_1$) filtrées pour générer des premières lignes de bande latérale ($4_1$, $4_3$) et modulation suivante des premières lignes de bande latérale ($4_1$, $4_3$) pour générer des deuxièmes lignes de bande latérale, les lignes de bande latérale ($4_1$, $4_3$) étant réglées par la modulation respective de telle sorte que des lignes de peigne de fréquences et des lignes de bande latérale ($4_1$, $4_3$) présentent mutuellement un écart de fréquences ($\Delta_1$) identique.

3. Procédé selon la revendication 1,
   **caractérisé par**
   une modulation des lignes de peigne de fréquences filtrées avec plusieurs fréquences de même écart pour générer plusieurs lignes de bande latérale.

4. Procédé selon l'une quelconque des revendications précédentes,
   **caractérisé en ce que**
   les lignes de bande latérale ($4_1$, $4_3$) sont réglées par la modulation de telle sorte que des lignes de peigne de fréquences et des lignes de bande latérale ($4_1$, $4_3$) fassent preuve d'une amplitude quasiment identique.

5. Procédé selon l'une quelconque des revendications précédentes,
   **caractérisé en ce que**
   pour générer les séquences d'impulsion, notamment des séquences d'impulsion de forme sin(x)/x, le taux de répétition de la source lumineuse et les fréquences de modulation sont synchronisées dans leur phase réciproque.

6. Procédé selon l'une quelconque des revendications précédentes,
   **caractérisé en ce que**
   l'écart de fréquences ($\Delta f_L$) du peigne de fréquences d'entrée (5a) est modifié par variation du taux de répétition du laser bloqué en mode.

7. Procédé selon l'une quelconque des revendications précédentes,
   **caractérisé en ce que**
   des lignes de peigne de fréquences ($4_1$) individuelles sont filtrées hors du peigne de fréquences d'entrée (5a) par PPA-SBS ($2_2$) (« Polarization-Pulling Assisted Stimulated Brillouin Scattering »).

8. Dispositif destiné à générer un peigne de fréquences optiques (5c, 5d) présentant un nombre défini de lignes de peigne de fréquences ($4_1$, $4_3$, $4_4$) avec un écart mutuel réglable, comprenant
   un laser bloqué en mode (MLL), destiné à générer un peigne de fréquences d'entrée (5a), qui comporte une pluralité de lignes de peigne de fréquences ($4_1$, $4_2$) d'entrée, présentant un écart de $\Delta f_L$,
   un filtre optique (2) consécutif, destiné à filtrer des lignes de peigne de fréquences ($4_1$) individuelles, présentant un écart de fréquences ($\Delta f_i$) identique hors du peigne de fréquences d'entrée (5a), avec la condition

   $$\Delta f_i = (n_k + 1) * \Delta f_L \text{ avec } n_k = 1, 2, 3, \ldots .$$

   avec $n_k$ = 1, 2, 3, ....
   et
   au moins un modulateur optique (3) activé par l'intermédiaire d'un générateur, pour la modulation des lignes de peigne de fréquences ($4_1$) filtrées, pour générer des lignes de bande latérale, qui présentent un écart de fréquences (Lif1) identique à celui des lignes de peigne de fréquences ($4_1$),
   des moyens pour la synchronisation de phase du taux de répétition de la source lumineuse (1) et des fréquences de modulation du générateur étant présents.

9. Dispositif selon la revendication 8,
   **caractérisé en ce que**

le filtre (2) est basé sur le principe de la polarization-pulling assisted stimulated Brillouin scattering (PPA-SBS).

Figur 1

Figur 2

Figur 3

EP 2 908 168 B1

Figur 4

Figur 5

EP 2 908 168 B1

Figur 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050271093 A1

**In der Beschreibung aufgeführte Nicht-Patentliteratur**

- Tunable generation of ultra-narrow linewith millimeter and THz-waves and their modulationb at 40 Gbd. **VON STEFAN PREUSSLER et al.** 2013 IEEE International Topical Meeting on Microwave Photonics (MWP). IEEE, 28. Oktober 2013